# EUROPÄISCHE PATENTSCHRIFT

(11) **EP 0 670 325 B1**
(45) Veröffentlichungstag und Bekanntmachung des Hinweises auf die Patenterteilung: **14.08.2002**
(21) Anmeldenummer: 95102489.2
(22) Anmeldetag: 22.02.1995
(51) Int. Cl.: C07F 17/00, C07F 7/08, C07F 7/30, C07F 7/22, C08F 10/00, C08F 4/642

(54) **Metallocenkomplexe mit heterofunktionellen Gruppen am Cyclopentadienylsystem**
Metallocenes with heterofunctional residues attached to the cyclopentadienyl group
Metallocènes avec des groupements hétérofonctionnels fixés au groupement cyclopentadiènyles

(30) Priorität: 03.03.1994 DE 4406963
(43) Veröffentlichungstag der Anmeldung: 06.09.1995
(73) Patentinhaber: Basell Polyolefine GmbH, 50389 Wesseling (DE)
(72) Erfinder: Langhauser, Franz, Dr., D-67098 Bad Dürkheim (DE); Fischer, David, Dr., D-67161 Gönnheim (DE); Kerth, Jürgen, Dr., D-67316 Carlsberg (DE); Schweier, Günther, Dr., D-67159 Friedelsheim (DE); Brintzinger, Hans-Herbert, Prof.Dr., CH-8274 Taegerswilen (CH); Barsties, Elke, D-78462 Konstanz (DE); Roell, Werner, Dr., D-78464 Konstanz (DE)
(74) Vertreter: Meyer, Thomas Hans

(56) Entgegenhaltungen:
- EP-A- 0 444 474
- EP-A- 0 519 237
- EP-A- 0 530 908
- EP-A- 0 577 581
- J. ORGANOMET. CHEM. (JORCAI,0022328X);79; VOL.173 (2); PP.221-9, UNIV. WUERZBURG;INST. ANORG. CHEM.; WUERZBURG; 8700; FED. REP. GER., XP002028054 JUTZI P ET AL: "Reactivity comparison of cyclopentadiene derivatives with IVb- and/or Vb element ligands. Reactions with Vb element halides and titanium tetrachloride"
- J. AM. CHEM. SOC. (JACSAT,00027863);83; VOL.105 (12); PP.3882-6, UNIV. MASSACHUSETTS;DEP. CHEM; AMHERST; 01003; MA; USA (US), XP002028055 RAUSCH M D ET AL: "Formation of [(diphenylphosphino)cyclopentadienyl]thall ium and its utility in the synthesis of heterobimetallic titanium-manganese complexes: the molecular structure of (.eta.5-cyclopentadienyl)dicar bonyl[(.eta.5-cyclopentadienyl)[.eta.5-(di phenylphosphino)cyclopentad ienyl]dichlorotitanium-P]manga"
- CHEMISTRY LETTERS Bd. 1989, Seiten 1853 - 1856
- CHEMIE IN UNSERER ZEIT Bd. 1994, Nr. 4, Seiten 197 - 207

## Beschreibung

Die vorliegende Erfindung betrifft quaternisierte Metallocenkomplexe, umfassend die Reaktionsprodukte aus Metallocenkomplexen der allgemeinen Formel I 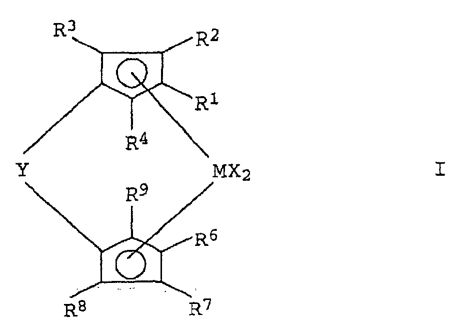 in der die Substituenten folgende Bedeutung haben:
- M: Titan, Zirkonium, Hafnium, Vanadium, Niob oder Tantal,
- X: Fluor, Chlor, Brom, Iod, Wasserstoff, C₁- bis C₁₀-Alkyl, C₆- bis C₁₅-Aryl oder -OR⁵,
wobei
- R⁵: C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
- R¹ bis R³ und R⁶ bis R⁸: Wasserstoff, C₁ bis C₁₀-Alkyl, 5- bis 7-gliedriges Cycloalkyl, das seinerseits C₁- bis C₁₀-Alkyle als Substituenten tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R¹⁰)₃ mit
- R¹⁰: C₁- bis C₁₀-Alkyl, C₆- bis C₁₅-Aryl oder C₃- bis C₁₀-Cycloalkyl,
- R⁴: 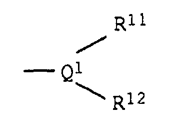
wobei
- Q¹: Stickstoff, Phosphor, Arsen, Antimon oder Wismut bedeutet,
- R¹¹, R¹²: C₁- bis C₁₀-Alkyl, C₃- bis C₁₅-Cycloalkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest oder die beiden Reste gemeinsam für 2 bis 15 C-Atome aufweisende cyclische Gruppen stehen können, die ihrerseits 1 bis 8 Heteroatome der III. bis VI. Hauptgruppe des Periodensystems der Elemente enthalten können
- R⁹: Wasserstoff, C₁ bis C₁₀-Alkyl, 5- bis 7-gliedriges Cycloalkyl, das seinerseits C₁- bis C₁₀-Alkyle als Substituenten tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, Si(R¹³)₃ oder 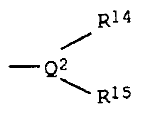
wobei
- R¹³: C₁- bis C₁₀-Alkyl, C₆- bis C₁₅-Aryl oder C₃- bis C₁₀-Cycloalkyl bedeutet,
- Q²: Stickstoff, Phosphor, Arsen, Antimon oder Wismut bedeutet,
- R¹⁴, R¹⁵: C₁- bis C₁₀-Alkyl, C₃- bis C₁₅-Cycloalkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest oder die beiden Reste gemeinsam für 2 bis 15 C-Atome aufweisende cyclische Gruppen stehen können, die ihrerseits 1 bis 8 Heteroatome der III. bis VI. Hauptgruppe des Periodensystems der Elemente enthalten können
- Y: für 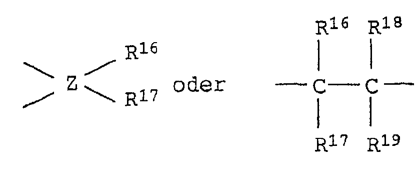 steht,
wobei Z Silicium, Germanium, Zinn oder Kohlenstoff bedeutet,
R¹⁶,R¹⁷,R¹⁸,R¹⁹ Wasserstoff, C₁- bis C₁₀-Alkyl, C₃- bis C₁₀-Cycloalkyl oder C₆- bis C₁₅-Aryl, wobei gegebenenfalls auch zwei benachbarte Reste gemeinsam für 4 bis 15 C-Atome aufweisende cyclische Gruppen stehen können,
mit einem quaternisierenden Agens der allgemeinen Formel V

AₐX² V

wobei
- A: C₁- bis C₁₀-Alkyl, C₃- bis C₁₅-Cycloalkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atome im Arylrest bedeutet,
- X²: Fluor, Chlor, Brom, Jod, SO₃²⁻, SO₄²⁻ oder NO₃⁻,
- a: 1 oder 2 ist.

Weiterhin betrifft die vorliegende Erfindung die Verwendung der quaternisierten Metallocenkomplexe als Katalysatoren zur Polymerisation von Alkenen sowie Verfahren zur Herstellung solcher Polymerisate unter Verwendung der Metallocenkomplexe.

Aus J.A. Ewen et al., Makromol. Chem., Makromol. Symp. 48/49 (1991), S. 253-295 ist bekannt, daß man bei Metallocenen als Katalysatoren für die Olefinpolymerisation durch Variation der Liganden Einfluß auf die Polymereigenschaften nehmen kann. Als Einflußmöglichkeiten der Substituenten am Liganden werden in K. Hortmann, H.-H. Brintzinger, New J. Chem. 16 (1992), S. 51-55 sterische Effekte und in I.-M. Lee et al., Organometallics 11 (1992), S. 2115-2122 elektronische Effekte diskutiert. In der EP-A 444 474 und der EP-A 519 237 werden die Liganden durch die Einführung unterschiedlicher Substituenten am Cyclopentadienylrest wie Alkyl- oder Arylsubstituenten bzw. benzokondensierte Systeme variiert. Aus W. Spaleck et al., Angew. Chemie 104 (1992), S. 1373-1376 sind Variationen in der Brücke bei chiralen stereorigiden Metallocenen zur Polymerisation von prochiralen Olefinen bekannt.

Bei diesen bekannten Metallocenen erhält man durch die jeweilige Variation entweder elektronische oder sterische Effekte, jedoch nicht beide Effekte zugleich.

In der EP-A 530 908 und in der EP-A 577 581 werden heterofunktionalisierte Metallocenkomplexe beschrieben, die Dialkylaminosubstituenten tragen. Diese Dokumente offenbaren jedoch nicht Metallocenkomplexe mit quaterisierten Aminosubstituenten. Ferner werden auch Substituenten, die Phosphor, Arsen, Antimon oder Wismut enthalten, nicht erwähnt.

Aufgabe der vorliegenden Erfindung war es daher, quaternisierte Metallocenkomplexe zur Verfügung zu stellen, die als Katalysatoren für die Olefinpolymerisation verwendet werden können und die sowohl durch elektronische als auch durch sterische Effekte Einfluß auf die Polymereigenschaften nehmen können.

Demgemäß wurden die eingangs definierten, quaternisierten Metallocenkomplexe gefunden.

Außerdem wurden die Verwendung der Metallocenkomplexe als Katalysatoren zur Polymerisation von Alkenen sowie Verfahren zur Herstellung solcher Polymerisate unter Verwendung der Metallocenkomplexe gefunden.

Von den Metallocenkomplexen der allgemeinen Formel I 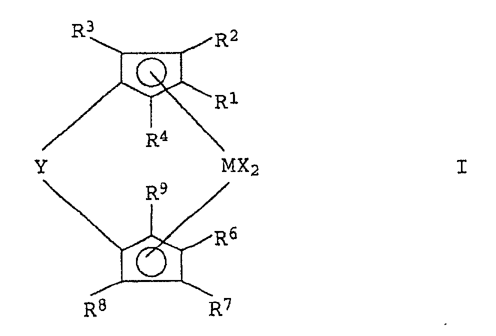 sind diejenigen bevorzugt, in denen die Substituenten folgende Bedeutung haben:
- M: Titan, Zirkonium oder Hafnium,
- X: Chlor oder C₁- bis C₄-Alkyl,
- R¹ bis R³ und R⁶ bis R⁸: Wasserstoff, C₁- bis C₆-Alkyl, Phenyl oder wobei zwei benachbarte Reste gemeinsam für 4 bis 12 C-Atome aufweisende cyclische Gruppen stehen, insbesondere Indenyl, mit C₁- bis C₄-Alkyl substituierte Indenyle und Benzindenyl, vorzugsweise weisen R¹ und R⁶ die gleiche Bedeutung auf, ebenfalls R² und R⁷ sowie R³ und R⁸
- Q¹: Stickstoff, Phosphor oder Arsen
- R¹¹, R¹²: sind vorzugsweise gleich und stehen für C₁- bis C₆-Alkyl oder die beiden Reste stehen gemeinsam für 2 bis 8 C-Atome aufweisende cyclische Gruppen, die ihrerseits 1 bis 6, insbesondere 1 bis 4 Heteroatome der III. bis VI. Hauptgruppe des Periodensystems der Elemente enthalten können, wobei P und N bevorzugt sind
- R⁴: Dimethylamino oder Pyrrolidino
- R⁹: ist vorzugsweise identisch mit R⁴
- Y: 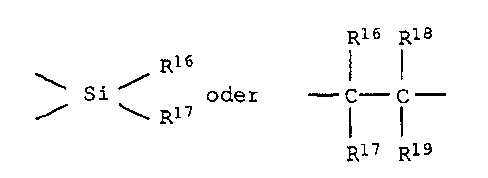
- R¹⁶, R¹⁷, R¹⁸, R¹⁹: Wasserstoff oder C₁- bis C₆-Alkyl.

Besonders bevorzugte Metallocenkomplexe I sind:
Dimethylsilandiyl-bis(2-N,N-dimethylamino-4-tert.butylcyclopentadienyl)zirkondichlorid,
Dimethylsilandiyl-bis(2-N,N-dimethylamino-4-phenylcyclopentadienyl)zirkondichlorid,
Dimethylsilandiyl-bis(2-N,N-dimethylamino-4-isopropylcyclopentadienyl)zirkondichlorid,
Dimethylsilandiyl-bis(2-N,N-dimethylamino-4-tert.butylcyclopentadienyl)titandichlorid,
Dimethylsilandiyl-bis(2-N,N-dimethylamino-4-tert.butylcyclopentadienyl)hafniumchlorid,
Dimethylsilandiyl-bis(2-N,N-dimethylamino-4-tert.butylcyclopentadienyl)zirkondimethyl,
Dimethylsilandiyl-bis(2-N,N-dimethylamino-4-tert.butylcyclopentadienyl)hafniumdimethyl,
Dimethylsilandiyl-bis(2-N,N-dimethylamino-4-tert.butylcyclopentadienyl)titandimethyl,
Dimethylsilandiyl-bis(2-N,N-dimethylaminoindenyl)titandichlorid,
Dimethylsilandiyl-bis(2-N,N-dimethylaminoindenyl)zirkondichlorid,
Dimethylsilandiyl-bis(2-N,N-dimethylaminoindenyl)-hafniumdichlorid,
Dimethylsilandiyl-bis(2-N,N-dimethylaminobenzindenyl)-titandichlorid,
Dimethylsilandiyl-bis(2-N,N-dimethylaminobenzindenyl)-zirkondichlorid,
Dimethylsilandiyl-bis(2-N,N-dimethylaminobenzindenyl)-hafniumdichlorid,
Dimethylsilandiyl-bis(2-Pyrrolidinoindenyl)titandichlorid,
Dimethylsilandiyl-bis(2-Pyrrolidinoindenyl)zirkondichlorid,
Dimethylsilandiyl-bis(2-Pyrrolidinoindenyl)hafniumdichlorid,
Dimethylsilandiyl-bis(2-Pyrrolidinobenzindenyl)titandichlorid,
Dimethylsilandiyl-bis(2-Pyrrolidinobenzindenyl)zirkondichlorid und
Dimethylsilandiyl-bis(2-Pyrrolidinobenzindenyl)-hafniumdichlorid.

Die Herstellung der Metallocenkomplexe I kann so erfolgen, daß die Ligandensysteme II 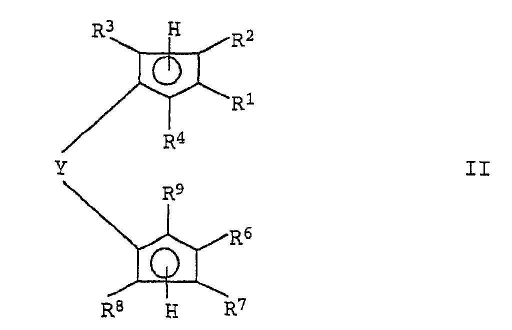 als Zwischenprodukte auftreten. Bezüglich der bevorzugten Substituenten gilt das bei den Metallocenkomplexen I Gesagte.

Ein bevorzugtes Verfahren zur Herstellung der Metallocenkomplexe I und somit auch zur Herstellung der Ligandensysteme II ist folgendes: 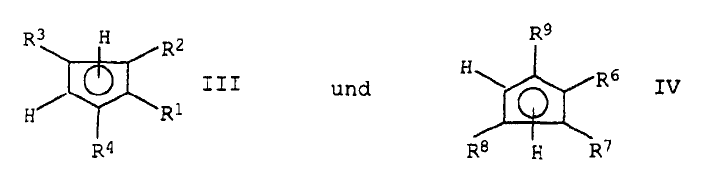 werden mit metallierenden Agenzien wie Alkali- oder Erdalkalialkyle oder -hydride, bevorzugt n-Butyllithium, Methyllithium oder Kaliumhydrid, und anschließend mit Y(X¹)₂ umgesetzt, wobei X¹ für Fluor, Chlor, Brom oder Jod, bevorzugt Chlor, steht und somit erhält man die Ligandensysteme II.

Die Reaktionsbedingungen sind an sich nicht kritisch. Üblicherweise werden III und IV mit organischen Lösungsmitteln wie Ether und/oder Kohlenwasserstoffen, vorzugsweise Diethylether oder Tetrahydrofuran (THF), versetzt und auf Temperaturen von -80°C bis 0°C gekühlt. Dann werden die metallierenden Agenzien, vorzugsweise n-Butyllithium, die bevorzugt mit einem Lösungsmittel wie Hexan versetzt sind, hinzugegeben. Nach Erwärmen auf Raumtemperatur wird Y(X¹)₂, welches ebenfalls mit einem organischen Lösungsmittel wie Diethylether oder THF versetzt ist, hinzugegeben. Die Aufarbeitung erfolgt durch Ausfällen oder Auskristallisieren.

Die Ligandensysteme II können nun ebenfalls mit metallierenden Agenzien wie Alkali- oder Erdalkalialkyle oder -hydride, bevorzugt n-Butyllithium, und anschließend mit MX₄ umgesetzt werden, wobei die erfindungsgemäßen Metallocenkomplexe I entstehen.

Die Reaktionsbedingungen zur Herstellung der Metallocenkomplexe I sind ebenfalls nicht kritisch; man arbeitet bevorzugt so, daß II mit organischen Lösungsmitteln wie Ether, bevorzugt Diethylether versetzt auf Temperaturen von -80°C bis 0°C gekühlt wird. Dann werden die metallierenden Agenzien, die bevorzugt mit einem Lösungsmittel wie Hexan versetzt sind, hinzugegeben. Nach Erwärmen auf Raumtemperatur und dem Zusatz von Kohlenwasserstoffen, bevorzugt Pentan, als unpolares Lösungsmittel kann das entsprechende Ligand-Lithiumsalz abgetrennt und isoliert werden. Dieses Ligand-Lithiumsalz wird nun vorzugsweise unter Inertgasatmosphäre mit MX₄ gemischt. Die Auftrennung der angefallenen Isomerengemische in Racemat- und Meso-Form erfolgt durch fraktionierte Kristallisation aus gängigen Lösungsmitteln wie Kohlenwasserstoffe, Ether oder halogenierte Kohlenwasserstoffe oder deren Mischungen.

Die Metallocenkomplexe I können als Katalysatoren zur Polymerisation von Alkenen verwendet werden und sie können sowohl durch elektronische als auch durch sterische Effekte Einfluß auf die Polymereigenschaften nehmen.

Vorzugsweise geht man dabei so vor, daß man die Metallocenkomplexe I mit einem quaternisierenden Agens der allgemeinen Formel V

AₐX² V

wobei
- A: C₁- bis C₁₀-Alkyl, C₃- bis C₁₅-Cycloalkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atome im Arylrest bedeutet,
- X²: Fluor, Chlor, Brom, Jod, SO₃²⁻, SO₄²⁻ oder NO₃⁻,
- a: 1 oder 2,
umsetzt. Bevorzugte Verbindungen der allgemeinen Formel V sind C₁- bis C₆-Alkylhalogenide, insbesondere Methyljodid, und C₆- bis C₁₀-Arylhalogenide, insbesondere 2,4,6-Trimethylbenzylchlorid.

Die Reaktionsbedingungen sind an sich unkritisch. Üblicherweise erfolgt die Umsetzung so, daß die Metallocenkomplexe I mit einem organischen Lösungsmittel wie aromatischen Kohlenwasserstoffen, vorzugsweise Toluol, versetzt werden und die quaternisierenden Agenzien bevorzugt bei Raumtemperatur hinzugegeben werden.

Für den Fall, daß R⁹ für 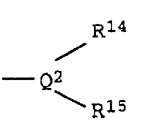 steht, erhält man somit aus den Metallocenkomplexen I quaternisierende Metallocenkomplexe I':

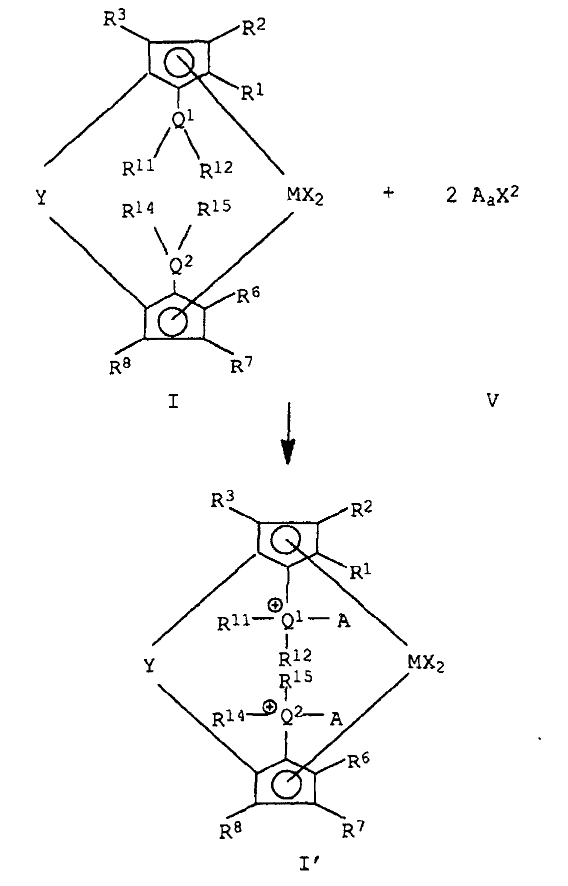

Diese quaternisierten Metallocenkomplexe I' können in-situ erzeugt werden und können in Verbindung mit einem Cokatalysator, vorzugsweise mit einer offenkettigen oder cyclischen Alumoxanverbindung der allgemeinen Formel VI oder VII 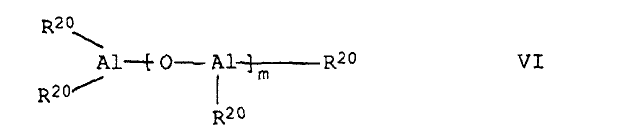 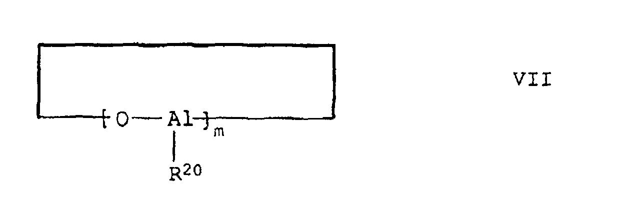 wobei R²⁰ eine C₁- bis C₄-Alkylgruppe, vorzugsweise Methyl- oder Ethylgruppe bedeutet und m für eine ganze Zahl von 5 bis 30, bevorzugt 10 bis 25 steht, zur Polymerisation von C₂- bis C₁₀-Alk-1-enen eingesetzt werden.

Die Herstellung dieser oligomeren Alumoxanverbindungen VI oder VII erfolgt üblicherweise durch Umsetzung einer Lösung von Trialkylaluminium mit Wasser und ist u.a. in der EP-A 284 708 und der US-A 4 794 096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen, vorliegen.

Es hat sich als vorteilhaft erwiesen, die quaternisierten Metallocenkomplexe I' und die oligomere Alumoxanverbindung in solchen Mengen zu verwenden, daß das atomare Verhältnis zwischen Aluminium aus der oligomeren Alumoxanverbindung und dem Übergangsmetall aus dem quarternisierten Metallocenkomplex I' im Bereich von 10:1 bis 10⁶:1, insbesondere im Bereich von 10:1 bis 10⁴:1, liegt.

Bei der Herstellung der Polymerisate von C₂- bis C₁₀-Alk-1-enen kann auch ein geträgertes Katalysatorsystem eingesetzt werden. Geeignete Trägermaterialien sind beispielsweise Kieselgele, bevorzugt solche der Formel SiO₂ · b Al₂O₃, worin b für eine Zahl im Bereich von 0 bis 2 steht, vorzugsweise 0 bis 0,5; dies sind also Alumosilikate oder Siliciumdioxid. Vorzugsweise weisen die Träger einen Teilchendurchmesser im Bereich von 1 bis 200 µm auf, insbesondere von 30 bis 80 µm. Derartige Produkte sind im Handel erhältlich, z.B. Silica Gel 332 der Fa. Grace. Weitere Träger sind u.a. feinteilige Polyolefine, beispielsweise feinteiliges Polypropylen.

Unter Polymerisaten von C₂- bis C₁₀-Alk-1-enen sind Homo- oder Copolymerisate von C₂- bis C₁₀-Alk-1-enen, insbesondere von C₂- bis C₆-Alk-1-enen zu verstehen. Bevorzugt sind Homopolymerisate des Ethylens oder des Propylens und Copolymerisate von Ethylen und Propylen, Ethylen und But-1-en, Ethylen und Pent-1-en, Ethylen und Hex-1-en sowie Propylen und But-1-en, Propylen und Pent-1-en wie auch Propylen und Hex-1-en. Der Anteil an Comonomeren kann dabei bis zu 50 Gew.-%, insbesondere bis zu 30 Gew.-% betragen.

Das Verfahren kann sowohl in Lösung, in einer Suspension, in der Gasphase oder aber als Substanzpolymerisation durchgeführt werden. Bevorzugt wird das Verfahren zur Herstellung der Polymerisate von C₂-C₁₀-Alk-1-enen in Lösung oder in der Gasphase durchgeführt. Die Polymerisationsbedingungen sind an sich unkritisch; Drücke von 0,5 bis 3000 bar, bevorzugt von 1 bis 80 bar und Temperaturen von -50 bis +300°C, bevorzugt von 0 bis 150°C haben sich als geeignet erwiesen. Die Polymerisation kann in Anwesenheit von üblichen Reglern, beispielsweise Wasserstoff oder C₂-C₈-Alk-1-enen und in üblichen Polymerisationsreaktoren durchgeführt werden.

Bei einem bevorzugten Verfahren zur Herstellung von Homopolymerisaten von C₂- bis C₁₀-Alk-1-enen geht man so vor, daß die aktiven Bestandteile des Katalysatorsystems in Toluol bei Temperaturen im Bereich von 0 bis 140°C vorgelegt werden.

Hierzu wird dann über einen Zeitraum von 0,5 bis 12 Stunden das C₂- bis C₁₀-Alk-1-en bei einem Druck von 1 bis 60 bar aufgepreßt. Die Aufarbeitung der Polymerisate erfolgt dann nach üblichen Methoden.

Das beschriebene Verfahren zur Herstellung von Polymerisaten von C₂- bis C₁₀-Alk-1-enen zeichnet sich durch geringen verfahrenstechnischen Aufwand aus.

Die nach dem beschriebenen Verfahren hergestellten Polymerisate von C₂- bis C₁₀-Alk-1-enen weisen ein ausgewogenes Eigenschaftsprofil auf, insbesondere ein hohes Molekulargewicht, enge Molekulargewichtsverteilung und hohe Stereospezifität, und eignen sich zur Herstellung von Fasern, Folien und Formkörpern.

### Beispiele

### Beispiel 1

### Herstellung von Dimethylsilandiylbis(2-N,N-dimethylaminoindenyl)zirkondichlorid I1

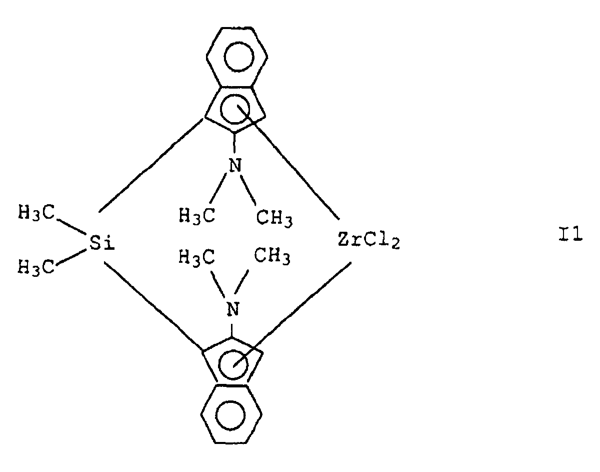

a) Herstellung des Ligandensystems Bis(2-N,N-dimethylaminoindenyl)dimethylsilan II1 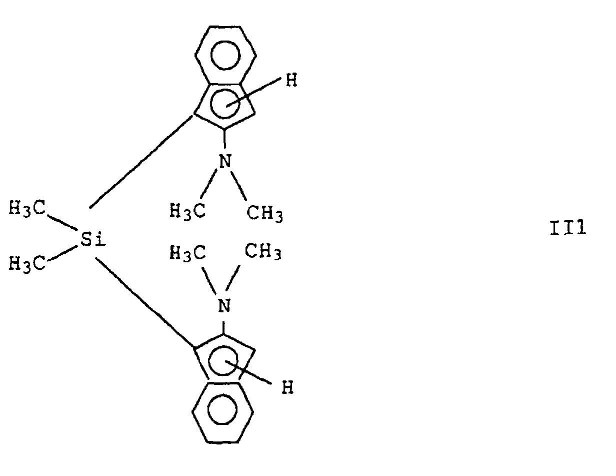 5,69 g (≙ 36 mmol) 2-N,N-Dimethylaminoinden III1 wurden in 100 ml Diethyiether gelöst und auf -10°C gekühlt. Hierzu wurden 22,4 ml (≙ 36 mmol) einer 1,6 molaren Lösung von n-Butyllithium in Hexan gegeben und nach dem Auftauen wurde 8 Stunden bei Raumtemperatur gerührt. Anschließend wurden hierzu 2,24 ml (≙ 18 mmol) Dimethyldichlorsilan in 20 ml Diethylether gegeben und weitere 18 Stunden gerührt. Das ausgefallene Lithiumchlorid wurde abfiltriert, das Filtrat auf die Hälfte eingeengt und auf -80°C gekühlt. Dabei fielen 3,24 g (≙ 14 mmol, 48 % d.Th.) II1 als schwach grauer, feinkristalliner Niederschlag an. ¹H-NMR (CDCl₃, δ rel TMS):

| d [ppm] (Mult) | Anzahl | J [Hz] | Zuordnung |
|---|---|---|---|
| - 1.59 (s) | | | |
| - 0.41 (s) | 6 | | |
| - 0.23 (s) | | | Si(CH₃)₃ |
| 2.77 (s) | 12 | 17.7 | N(CH₃)₂ |
| 3.93 (d) | 2 | 16.9 | Fünfring-H |
| 5.63 (d) | 2 | | Fünfring-H |
| 6.8-7.4 (m,breit) | 8 | | Aromat. H |

b) Umsetzung von II1 zu I1
17,56 (≙ 47 mmol) II1 wurden in 250 ml Diethylether gelöst und auf -10°C gekühlt. Hierzu wurden 58,75 ml (≙ 94 mmol) einer 1,6 molaren Lösung von n-Butyllithium in Hexan gegeben. Nachdem die Mischung 2 Stunden bei Raumtemperatur gerührt worden war wurden 100 ml n-Pentan zugegeben, eine weitere Stunde gerührt und anschließend filtriert. Man erhielt 17,21 g (≙ 44,5 mmol, 94,7 % d.Th.) des Ligand-Lithiumsalzes.
3 g (≙ 7,7 mmol) dieses Ligand-Lithiumsalzes wurden mit 1,79 g (≙ 7,7 mmol) ZrCl₄ unter Inertgasatmosphäre trocken gemischt. Hierzu wurden 100 ml Toluol gegeben und die braungelbe Suspension 18 Stunden bei Raumtemperatur gerührt. Die überstehende Lösung wurde abgenommen und am Ölpumpenvakuum zur Trockne eingedampft. Auf diese Weise erhielt man 1 g (≙ 1,8 mmol, 24 % d.Th.) an I1 mit einem Verhältnis an Racemat- zu Meso-Form von 3 : 1.
Der Rückstand aus dem Reaktionsansatz wurde mit 150 ml Methylenchlorid extrahiert, filtriert und auf -80°C gekühlt. Aus dieser Lösung kristallisierten 1,5 g (≙ 2,4 mmol, 36 % d.Th.) an I1. Durch Umkristallisieren aus Methylenchlorid/Diethylether (Vol.-Verhältnis 1 : 9) bei -80°C erhielt man 0,7 g reines rac-I1. (vgl. Fig. 1: Kristallstruktur von I1)
¹H-NMR (CDCl₃, δ rel TMS):

| d [ppm] (Mult) | Anzahl | Zuordnung |
|---|---|---|
| racemische Verb. | | |
| 1.29 (s) | 6 | Si(CH₃)₂ |
| 2.61 (s) | 12 | N(CH₃)₂ |
| 6.39 (s) | 2 | Cp-H |
| 6.74 - 7.55 (m,breit) | 8 | Aromat.-H |
| | | |

| meso Verb. | | |
|---|---|---|
| 1.32 (s) | 3 | Si(CH₃)₂ |
| 1.36 (s) | 3 | Si(CH₃)₂ |
| 2.80 (s) | 12 | N(CH₃)₂ |
| 6.40 (s) | 2 | Cp-H |
| 6.74-7.55 (m,breit) | 8 | Aromat.-H |

Massenspektrum (El, 70 eV, 220°C) m/e = 534 (M⁺, 22,3 %), 376 (M⁺ - C₉H₆N(CH₃)₂, 14,9 %).

### Beispiel 2

### Herstellung von Dimethylsilandiylbis(2-pyrrolidino-1- indenyl)-zirkondichlorid I2

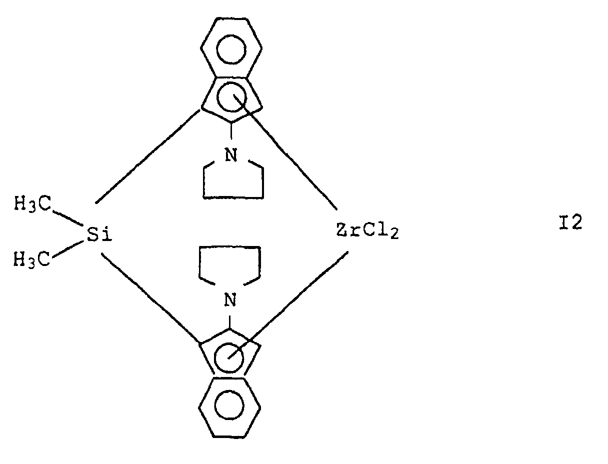

a) Herstellung des Ligandensystems Bis(2-pyrrolidino-1-indenyl)dimethylsilan II2 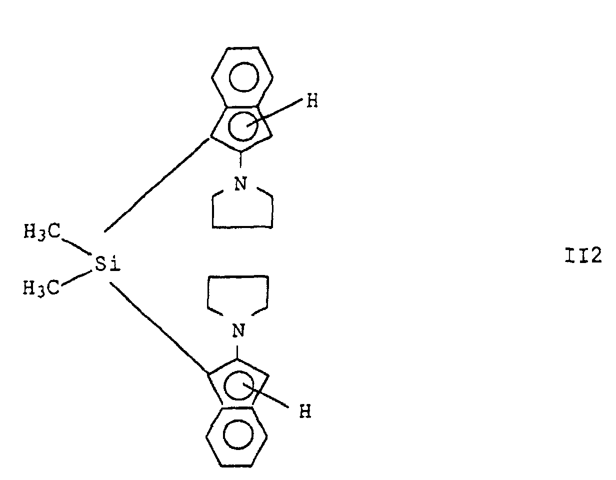
Zu einer auf -78°C gekühlten Lösung von 15 g (≙ 81 mmol) 2-Pyrrolidino-1-inden III2 in 250 ml THF wurden 50,6 ml (≙ 81 mmol) einer 1,6 molaren Lösung von n-Butyllithium in Hexan gegeben. Nach der Zugabe wurde noch 30 Minuten bei -78°C und weitere 2 Stunden bei Raumtemperatur gerührt. Anschließend wurden hierzu 4,9 ml (≙ 40 mmol) Dimethyldichlorsilan in 50 ml THF gegeben und weitere 16 Stunden gerührt. Das Lösungsmittel wurde am Ölpumpenvakuum entfernt, der Rückstand in 200 ml Diethylether aufgenommen und 90 Minuten gerührt, dann wurde filtriert und das Filtrat auf -80°C gekühlt. Dabei fielen 7,76 g (≙ 18 mmol, 45 % d.Th.) II2 als graues Pulver an.
¹H-NMR (CDCl₃, δ rel TMS):

| d [ppm] (Mult) racemische Verb. | Anzahl | J [Hz] | Zuordnung |
|---|---|---|---|
| - 0.67 (s) | | | Si(CH₃)₂ |
| - 0.50 (s) | 6 | | |
| - 0.25 (s) | | | |
| 1.65-1.95 (m,breit) | 8 | | Pyrrolidin-β-H |
| 2.94-3.17 (m,breit) | 8 | | Pyrrolidin-α-H |
| 3.81 (d) | 2 | 16.6 | Cp-H |
| 5.63 (d) | 2 | 3.6 | Cp-H |
| 6.92-7.34 (m,breit) | 8 | | Aromat |

b) Umsetzung von II2 zu I2
Zu einer auf -70°C gekühlten Lösung von 8,1 g (≙ 19 mmol) II2 in 250 ml Diethylether wurden 23,7 ml (≙ 38 mmol) einer 1,6 molaren Lösung von n-Butyllithium in Hexan gegeben. Nach der Zugabe wurde noch 30 Minuten bei -70°C und weitere 2 Stunden bei Raumtemperatur gerührt. Anschließend wurden 100 ml n-Pentan zugegeben, eine weitere Stunde gerührt, filtriert und der Niederschlag am Ölpumpenvakuum getrocknet. Man erhielt 7,57 g (≙ 17 mmol, 91 % d.Th.) des Ligand-Lithiumsalzes.
3 g (≙ 6,8 mmol) dieses Ligand-Lithiumsalzes wurden mit 1,68 g (≙ 6,8 mmol) ZrCl₄ unter Inertgasatmosphäre trocken gemischt. Hierzu wurden 100 ml Toluol gegeben und 18 Stunden bei Raumtemperatur gerührt. Die überstehende Lösung wurde abgenommen und am Ölpumpenvakuum zur Trockene eingedampft. Auf diese Weise erhielt man 1,1 g (≙ 1,9 mmol, 27 % d.Th.) an I2 mit einem Verhältnis an Racemat- zu Meso-Form von 1 : 1,5. Der Rückstand aus dem Reaktionsansatz wurde mit 150 ml Methylenchlorid extrahiert, filtriert und auf -80°C gekühlt. Man erhielt 0,7 g (≙ 1,2 mmol, 18 % d.Th.) an reinem rac-I2.
¹H-NMR (CDCl₃, δ rel TMS):

| d [ppm] (Mult) | Anzahl | Zuordnung |
|---|---|---|
| racemische Verb. | | |
| 1.25 (s) | 6 | Si(CH₃)₂ |
| 1.72-1.77 (m) | 8 | Pyrrolidin-β-H |
| 3.10-3.97 (m) | 8 | Pyrrolidin-α-H |
| 6.21 (s) | 2 | Cp-H |
| 7.00-7.60 (m,breit) | 8 | Aromat.-H |
| | | |

| meso Verb. | | |
|---|---|---|
| 1.19 (s) | 3 | Si(CH₃)₂ |
| 1.38 (s) | 3 | Si(CH₃)₂ |
| 1.77-1.89 (m) | 8 | Pyrrolidin-β-H |
| 3.17-3.30 (m) | 8 | Pyrrolidin-α-H |
| 6.21 (s) | 8 | Cp-H |
| 7.00-7.60 (m,breit) | 8 | Aromat.-H |

Massenspektrum (El, 70 eV, 220°C m/e = 586 (M⁺, 76 %)

### Beispiele 3 und 4

### Herstellung von Polypropylen (PP) durch Lösungspolymerisation

### Beispiel 3

1,97 mg (≙ 3,7 µmol) I1 in 20 ml Toluol wurden zuerst mit 0,3 ml (≙ 4,8 mmol) Methyljodid und dann mit 2,5 ml (≙ 3,9 mmol) einer 10 gew.-%igen Lösung von Methylalumoxan in Toluol versetzt und 90 Minuten gerührt. Nach Zugabe von weiteren 200 ml Toluol wurde auf 50°C erwärmt und bei dieser Temperatur und einem Druck von 1 bar Propylen aufgepreßt. Dieser Druck wurde während der gesamten Polymerisationsdauer von 4,5 Stunden konstant gehalten. Zur Beendigung der Polymerisation wurde die Reaktionsmischung in eine Lösung aus 500 ml Methanol und 5 ml konzentrierte Salzsäure gegossen, das ausgefallene PP abfiltriert, mehrmals mit Methanol gewaschen und getrocknet.

Die Eigenschaften des entstandenen PP sind in der Tabelle zusammengestellt.

### Beispiel 4

Es wurde wie in Beispiel 3 gearbeitet, jedoch wurden 1,67 mg (≙ 3,2 µmol) I1 eingesetzt und statt des Methyljodids 50 mg (≙ 2,9 mmol) 2,4,6-Trimethylbenzylchlorid.

Die Eigenschaften des entstandenen PP sind ebenfalls in der Tabelle zusammengestellt.

| | Bsp. 3 | Bsp. 4 |
|---|---|---|
| Ausbeute [g] | 0,92 | 0,40 |
| Produktivität [g/g Metallocen I1] | 467 | 239 |
| Schmelzpunkt [°C] | 130 | 133 |
| M_{w} | 21 700 | 12 900 |
| Mₙ | 10 300 | 8 260 |
| M_{w} : Mₙ | 2,1 | 1,6 |
| mmmm-Pentaden [%] | 77 | 79 |

Die Schmelzpunkte wurden mittels DSC-Messungen (10°/min Aufheizrate) bestimmt. Die Bestimmung der Gewichtsmittelwerte M_{w} und Zahlenmittelwerte Mₙ erfolgte durch Gelpermeationschromatographie. Die Pentaden wurden mittels ¹³C-NMR-Spektroskopie bestimmt.

### Vergleichsbeispiel V1:

Es wurde wie in Beispiel 3 bzw. Beispiel 4 gearbeitet, jedoch ohne den Zusatz von Methyljodid bzw. 2,4,6-Trimethylbenzylchlorid. In diesem Fall konnte keine Polymerisation beobachtet werden.

### Beispiel 5

### Herstellung von PP durch Gasphasenpolymerisation

a) Herstellung des geträgerten Katalysators
   Zu einer Lösung von 15,4 mg (≙ 28,8 µmol) I1 in 40 ml Toluol wurden bei Raumtemperatur 0,1 ml (≙ 1,6 mmol) Methyljodid gegeben und 1 Stunde gerührt. Dann wurde das Lösungsmittel am Ölpumpenvakuum vollständig abgezogen und der verbliebene Rückstand mit 11,3 ml (≙ 17,2 mmol) einer 1,53 molaren Lösung von Methylalumoxan in Toluol versetzt und 15 Minuten voraktiviert. Zu dieser Lösung wurden dann als Träger 1,9 g Polypropylenpulver mit einem mittleren Korndurchmesser von 10 µm gegeben und weitere 30 Minuten gerührt. Anschließend wurden die flüchtigen Bestandteile am Ölpumpenvakuum entfernt. Man erhielt 2,96 g eines rieselfähigen Katalysatorpulvers mit einer Belegung von 15,2 µmol/g Träger.
b) Polymerisation
   In einen trockenen, mit Stickstoff gespülten 10 l Autoklaven wurden nacheinander 20 g Kochsalzvorlage und 5 ml Triethylaluminium (1molare Lösung in Heptan) gegeben und 15 Minuten gerührt. Anschließend wurden 2 g des nach a) hergestellten geträgerten Katalysators im Stickstoff-Gegenstrom in den Reaktor gefüllt und dieser verschlossen. Bei einer Rührerdrehzahl von 350 UpM wurde auf 70°C aufgeheizt und gleichzeitig der Innendruck stufenweise durch Propylenzufuhr bis zum Enddruck von 28 bar erhöht. Anschließend wurde 1,5 h polymerisiert wobei durch eine automatische Druckregelung Frischpropylen nachgeführt wurde. Nach beendeter Reaktion wurde während 10 Minuten auf Atmosphärendruck entspannt und das entstandene PP im Stickstoffstrom ausgetragen. Zum Entfernen der Kochsalzvorlage wurde das Polymerisat mehrfach mit Wasser, dann mit Methanol gewaschen und im Trockenschrank bei 80°C/20 mbar 6 Stunden getrocknet. Man erhielt 120 g Polypropylenpulver.
   Produktivität: 11 500 g/g Metallocen I1
   intrinsische Viskosität [η] = 1,34 dl/g (bestimmt in Decalin bei 135°C)
   Schmelzpunkt: 143,5°C
   M_{w} = 171 200
   M_{w} : Mₙ = 3,1
   mmmm-Pentaden: 91,2 %

## Patentansprüche

1. Quaternisierte Metallocenkomplexe, umfassend die Umsetzungsprodukte aus Metallocenkomplexen der allgemeinen Formel I 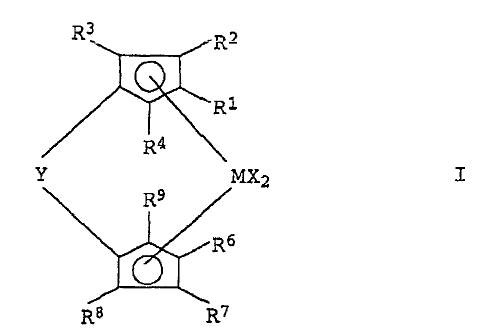 in der die Substituenten folgende Bedeutung haben:
M Titan, Zirkonium, Hafnium, Vanadium, Niob oder Tantal,
X Fluor, Chlor, Brom, Iod, Wasserstoff, C₁- bis C₁₀-Alkyl, C₆- bis C₁₅-Aryl oder -OR⁵,
wobei
R⁵ C₁- bis C₁₀-Alkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeutet,
R¹ bis R³ und R⁶ bis R⁸ Wasserstoff, C₁ bis C₁₀-Alkyl, 5- bis 7-gliedriges Cycloalkyl, das seinerseits C₁bis C₁₀-Alkyle als Substituenten tragen kann, C₆- bis C₁₅-Aryl oder Arylalkyl, wobei gegebenenfalls auch zwei benachbarte Reste gemeinsam für 4 bis 15 C-Atome aufweisende cyclische Gruppen stehen können, oder Si(R¹⁰)₃ mit
R¹⁰ C₁- bis C₁₀-Alkyl, C₆- bis C₁₅-Aryl oder C₃bis C₁₀-Cycloalkyl,
R⁴ 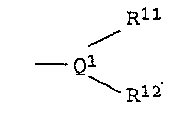
wobei
Q¹ Stickstoff, Phosphor, Arsen, Antimon oder Wismut bedeutet,
R¹¹, R¹² C₁- bis C₁₀-Alkyl, C₃- bis C₁₅-Cycloalkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest oder die beiden Reste gemeinsam für 2 bis 15 C-Atome aufweisende cyclische Gruppen stehen können, die ihrerseits 1 bis 8 Heteroatome der III. bis VI. Hauptgruppe des Periodensystems der Elemente enthalten können,
R⁹ Wasserstoff, C₁ bis C₁₀-Alkyl, 5- bis 7-gliedriges Cycloalkyl, das seinerseits C₁- bis C₁₀-Alkyle als Substituenten tragen kann, C₆bis C₁₅-Aryl oder Arylalkyl, wobei gegebenenfalls auch zwei benachbarte Reste gemeinsam für 4 bis 15 C-Atome aufweisende cyclische Gruppen stehen können, Si(R¹³)₃ oder 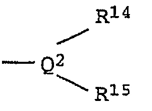
wobei
R¹³ C₁- bis C₁₀-Alkyl, C₆- bis C₁₅-Aryl oder C₃- bis C₁₀-Cycloalkyl bedeutet,
Q² Stickstoff, Phosphor, Arsen, Antimon oder Wismut bedeutet,
R¹⁴, R¹⁵ C₁- bis C₁₀-Alkyl, C₃- bis C₁₅-Cycloalkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest oder die beiden Reste gemeinsam für 2 bis 15 C-Atome aufweisende cyclische Gruppen stehen können, die ihrerseits 1 bis 8 Heteroatome der III. bis VI. Hauptgruppe des Periodensystems der Elemente enthalten können
Y für 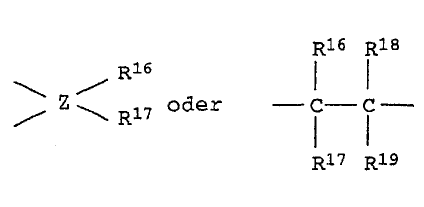 steht,
wobei Z Silicium, Germanium, Zinn oder Kohlenstoff bedeutet,
R¹⁶, R¹⁷, R¹⁸, R¹⁹ Wasserstoff, C₁- bis C₁₀-Alkyl, C₃- bis C₁₀-Cycloalkyl oder C₆- bis C₁₅-Aryl, wobei gegebenenfalls auch zwei benachbarte Reste gemeinsam für 4 bis 15 C-Atome aufweisende cyclische Gruppen stehen können,
mit einem quaternisierenden Agens der allgemeinen Formel V
AₐX² V
wobei
A C₁- bis C₁₀-Alkyl, C₃- bis C₁₅-Cycloalkyl, C₆- bis C₁₅-Aryl, Alkylaryl, Arylalkyl, Fluoralkyl oder Fluoraryl mit jeweils 1 bis 10 C-Atomen im Alkylrest und 6 bis 20 C-Atome im Arylrest bedeutet,
X² Fluor, Chlor, Brom, Jod, SO₃²⁻, SO₄²⁻ oder NO₃⁻,
a 1 oder 2 ist.

2. Verwendung von quaternisierten Metallocenkomplexen gemäß Anspruch 1 als Katalysatoren zur Polymerisation von Alkenen.

3. Verfahren zur Herstellung von Polymerisaten von C₂- bis C₁₀-Alk-1-enen bei Drücken von 0,5 bis 3000 bar und Temperaturen von -50 bis 300°C unter Verwendung eines Katalysatorsystems, **dadurch gekennzeichnet, daß** als Katalysatorsysteme Metallocenkomplexe der allgemeinen Formel I, die mit einem quaternisierenden Agens der allgemeinen Formel V
AₐX² V
wobei
A C₁- bis C₁₀-Alkyl, C₃- bis C₁₅-Cycloalkyl, C₆bis C₁₅-Aryl, Alkylaryl, Arylalkyl, Fluoralkyl oder Fluoraryl mit jeweils 1 bis 10 C-Atomen im Alkylrest und 6 bis 20 C-Atome im Arylrest bedeutet
X² Fluor, Chlor, Brom, Jod, SO₃²⁻, SO₄²⁻ oder NO₃⁻
a 1 oder 2,
umgesetzt werden, eingesetzt werden und gegebenenfalls eine offenkettige oder cyclische Alumoxanverbindung der allgemeinen Formel VI oder VII 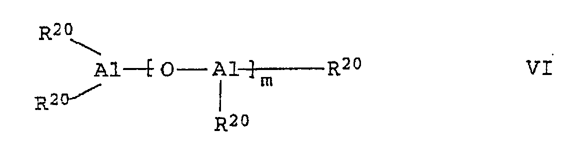 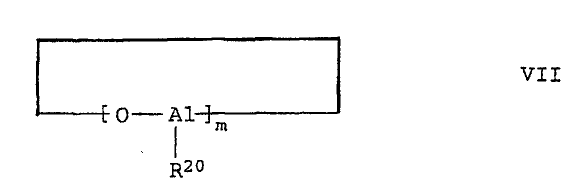
wobei R²⁰ eine C₁- bis C₄-Alkylgruppe bedeutet und
m für eine ganze Zahl von 5 bis 30 steht.

## Claims

1. A quaternized metallocene complex comprising a reaction product of a metallocene complex of the formula I 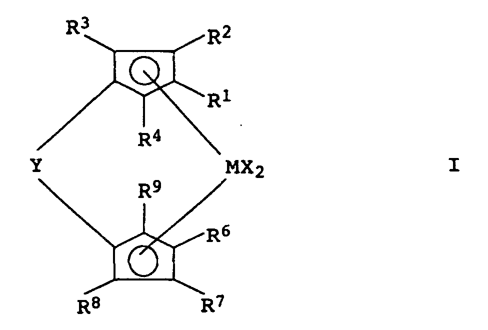 where
M is titanium, zirconium, hafnium, vanadium, niobium or tantalum,
X is fluorine, chlorine, bromine, iodine, hydrogen, C₁-C₁₀-alkyl, C₆-C₁₅-aryl or -OR⁵,
R⁵ is C₁-C₁₀-alkyl, C₆-C₁₅-aryl, alkylaryl, arylalkyl, fluoroalkyl or fluoroaryl, each having 1 to 10 carbon atoms in the alkyl radical and 6 to 20 carbon atoms in the aryl radical,
R¹ to to R³ and R⁶ to R⁸ are each hydrogen, C₁-C₁₀-alkyl or 5-membered to 7-membered cycloalkyl which in turn may carry C₁-C₁₀-alkyl substituents, or are each C₆-C₁₅-aryl or arylalkyl, where two neighboring radicals together may furthermore be a cyclic group of 4 to 15 carbon atoms, or Si(R¹⁰)₃,
R¹⁰ is C₁-C₁₀-alkyl, C₆-C₁₅-aryl or C₃-C₁₀-cycloalkyl,
R⁴ is 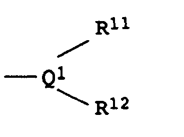
Q¹ is nitrogen, phosphorus, arsenic, antimony or bismuth,
R¹¹ and R¹² are each C₁-C₁₀-alkyl, C₃-C₁₅-cycloalkyl, C₆-C₁₅-aryl, alkylaryl, arylalkyl, fluoroalkyl or fluoroaryl, each having 1 to 10 carbon atoms in the alkyl radical and 6 to 20 carbon atoms in the aryl radical, or the two radicals together may be a cyclic group of 2 to 15 carbon atoms which in turn may contain from 1 to 8 heteroatoms of main groups III to VI of the Periodic Table of Elements,
R⁹ is hydrogen, C₁-C₁₀-alkyl or 5-membered to 7-membered cycloalkyl which in turn may carry C₁-C₁₀-alkyl substituents, or is C₆-C₁₅-aryl or arylalkyl, where two neighboring radicals together may furthermore be a cyclic group of 4 to 15 carbon atoms, or Si(R¹³)₃ or 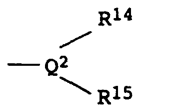
R¹³ is C₁-C₁₀-alkyl, C₆-C₁₅-aryl or C₃-C₁₀-cycloalkyl,
Q² is nitrogen, phosphorus, arsenic, antimony or bismuth,
R¹⁴ and R¹⁵ are each C₁-C₁₀-alkyl, C₃-C₁₅-cycloalkyl, C₆-C₁₅-aryl, alkylaryl, arylalkyl, fluoroalkyl or fluoroaryl, each having 1 to 10 carbon atoms in the alkyl radical and 6 to 20 carbon atoms in the aryl radical, or the two radicals together may be a cyclic group of 2 to 15 carbon atoms which in turn may contain 1 to 8 heteroatoms of main groups III to VI of the Periodic Table of Elements,
Y is 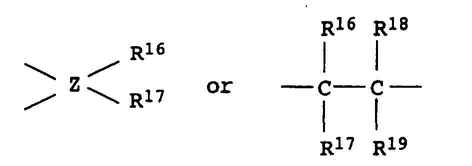
Z is silicon, germanium, tin or carbon, and
R¹⁶,R¹⁷,R¹⁸ and R¹⁹ are each hydrogen, C₁-C₁₀-alkyl, C₃-C₁₀-cycloalkyl or C₆-C₁₅-aryl, where two neighboring radicals together may furthermore be a cyclic group of 4 to 15 carbon atoms, with a quaternizing agent of the formula V
AₐX² V
where
A is C₁-C₁₀-alkyl, C₃-C₁₅-cycloalkyl, C₆-C₁₅-aryl, alkylaryl, arylalkyl, fluoroalkyl or fluoroaryl, where each alkyl radical is of 1 to 10 carbon atoms and each aryl radical is of 6 to 20 carbon atoms,
X² is fluorine, chlorine, bromine, iodine, SO₃²⁻, SO₄²⁻ or NO₃⁻, and
a is 1 or 2.

2. The use of a quaternized metallocene complex as claimed in claim 1 as a catalyst for the polymerization of alkenes.

3. A process for the preparation of a polymer of C₂-C₁₀-alk-1-enes at from 0.5 to 3000 bar and from -50 to 300°C using a catalyst system, wherein the catalyst system used comprises a metallocene complex of the formula I which is reacted with a quaternizing agent of the formula V
AₐX² V
where
A is C₁-C₁₀-alkyl, C₃-C₁₅-cycloalkyl, C₆-C₁₅-aryl, alkylaryl, arylalkyl, fluoroalkyl or fluoroaryl, where each alkyl radical is of 1 to 10 carbon atoms and each aryl radical is of 6 to 20 carbon atoms,
X² is fluorine, chlorine, bromine, iodine, SO₃²⁻, SO₄²⁻ or NO₃⁻, and
a is 1 or 2,
and, if required, an open-chain or cyclic alumoxane compound of the formula VI or VII 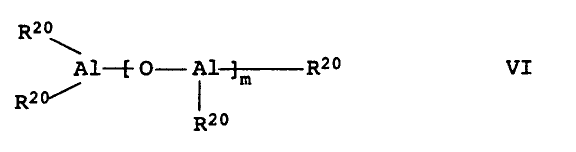 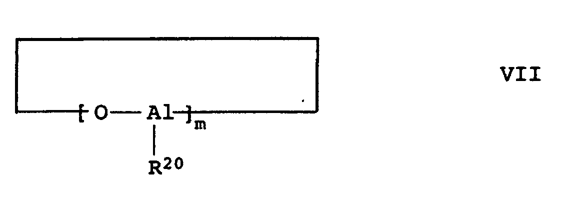 where
R²⁰ is C₁-C₄-alkyl and
m is an integer from 5 to 30.

## Revendications

1. Complexes métallocène quaternisés comprenant les produits réactionnels des complexes métallocènes de formule générale I 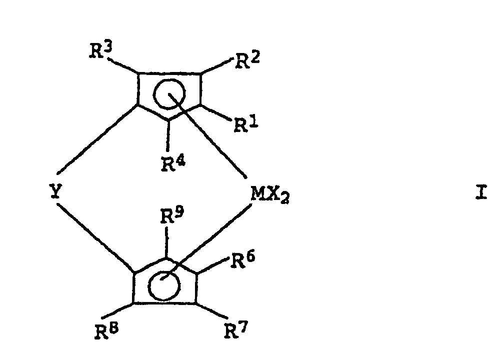 dans laquelle les substituants prennent la signification suivante :
M représente un atome de titane, de zirconium, d'hafnium, de vanadium, de niobium ou de tantale,
X représente un atome de fluor, de chlore, de brome, d'iode, d'hydrogène ou un groupe alkyle en C₁ à C₁₀, aryle en C₆ à C₁₅ ou -OR⁵,
où R⁵ représente un groupe alkyle en C₁ à C₁₀, aryle en C₆ à C₁₅, alkylaryle, arylalkyle, fluoroalkyle ou fluoroaryle présentant chacun 1 à 10 atomes de C dans le reste alkyle et 6 à 20 atomes de C dans le reste aryle,
R¹ à R³ et R⁶ à R⁸ représentent un atome d'hydrogène, un groupe alkyle en C₁ à C₁₀, un groupe cycloalkyle à 5 à 7 maillons qui, quant à lui, présente éventuellement des groupes alkyle en C₁ à C₁₀ en tant que substituants, un groupe arylalkyle ou aryle en C₆ à C₁₅, où deux restes vicinaux peuvent représenter conjointement un groupe cyclique présentant 4 à 15 atomes de C, ou bien Si(R¹⁰)₃ où
R¹⁰ représente un groupe alkyle en C₁ à C₁₀, aryle en C₆ à C₁₅ ou cycloalkyle en C₃ à C₁₀,
R⁴ représente 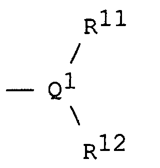
où Q¹ représente un atome d'azote, de phosphore, d'arsenic, d'antimoine ou de bismuth,
R¹¹, R¹² représentent un groupe alkyle en C₁ à C₁₀, cycloalkyle en C₃ à C₁₅, aryle en C₆ à C₁₅, alkylaryle, arylalkyle, fluoroalkyle ou fluoroaryle présentant chacun 1 à 10 atomes de C dans le reste alkyle et 5 à 20 atomes de C dans le reste aryle, ou bien les deux restes représentent conjointement un groupe cyclique présentant 2 à 15 atomes de C, qui, quant à eux, présentent éventuellement 1 à 8 hétéroatomes du III^{ème} au VI^{ème} Groupe principal de la Classification des Eléments,
R⁹ représente un atome d'hydrogène, un groupe alkyle en C₁ à C₁₀, un groupe cycloalkyle à 5 à 7 maillons qui, quant à lui, présente des groupes alkyle en C₁ à C₁₀ en tant que substituants, un groupe arylalkyle ou aryle en C₆ à C₁₅, où deux restes vicinaux peuvent représenter conjointement un groupe cyclique présentant 4 à 15 atomes de C,
Si (R¹³)₃ ou 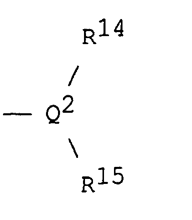
où R¹³ représente un groupe alkyle en C₁ à C₁₀, aryle en C₆ à C₁₅ ou cycloalkyle en C₃ à C₁₀,
Q² représente un atome d'azote, de phosphore, d'arsenic, d'antimoine ou de bismuth,
R¹⁴, R¹⁵ représentent un groupe alkyle en C₁ à C₁₀, cycloalkyle en C₃ à C₁₅, aryle en C₆ à C₁₅, alkylaryle, arylalkyle, fluoroalkyle, ou fluoroaryle présentant chacun 1 à 10 atomes de C dans le reste alkyle et 6 à 20 atomes de C dans le reste aryle, ou bien les deux restes peuvent représenter conjointement un groupe cyclique présentant 2 à 15 atomes de C qui, quant à eux, comprennent éventuellement 1 à 8 hétéroatomes du III^{ème} au VI^{ème} Groupe Principal de la Classification des Eléments,
Y représente 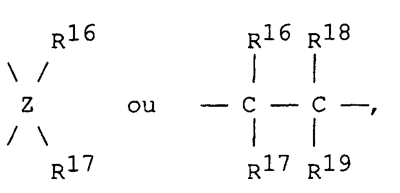
où Z représente un atome de silicium, de germanium, d'étain ou de carbone,
R¹⁶, R¹⁷, R¹⁸, R¹⁹ représentent un atome d'hydrogène, un groupe alkyle en C₁ à C₁₀, cycloalkyle en C₃ à C₁₀ ou aryle en C₆ à C₁₅, où deux restes vicinaux peuvent représenter conjointement un groupe cyclique qui présente 4 à 15 atomes de C,
avec un agent de quaternisation de formule générale V
AₐX² V
où
A représente un groupe alkyle en C₁ à C₁₀, cycloalkyle en C₃ à C₁₅, aryle en C₆ à C₁₅, alkylaryle, arylalkyle, fluoroalkyle ou fluoroaryle présentant chacun 1 à 10 atomes de C dans le reste alkyle et 6 à 20 atomes de C dans le reste aryle,
X² représente un atome de fluor, de chlore, de brome, d'iode, SO₃²⁻, SO₄²⁻ ou NO₃⁻,
a vaut 1 ou 2.

2. Mise en oeuvre des complexes métallocène quaternisés selon la revendication 1, en tant que catalyseurs pour la polymérisation d'alcènes.

3. Procédé de préparation de polymères à partir d'alc-1-ènes en C₂ à C₁₀, à une pression comprise entre 0,5 bar et 3 000 bars et à une température comprise entre -50°C et 300°C, en employant un système de catalyseur, **caractérisé en ce que** l'on met en oeuvre, en tant que système de catalyseur, les complexes métallocène de formule générale I que l'on a fait réagir avec un agent quaternisant de formule générale V
AₐX² V
où
A représente un groupe alkyle en C₁ à C₁₀, cycloalkyle en C₃ à C₁₅, aryle en C₆ à C₁₅, alkylaryle, arylalkyle, fluoroalkyle ou fluoroaryle présentant chacun 1 à 10 atomes de C dans le reste alkyle et 6 à 20 atomes de C dans le reste aryle,
X² représente un atome de fluor, de chlore, de brome, d'iode, SO₃²⁻, SO₄²⁻ ou NO₃⁻,
a vaut 1 ou 2,
et éventuellement un composé aluminoxane cyclique ou à chaîne ouverte, de formule générale VI ou VII 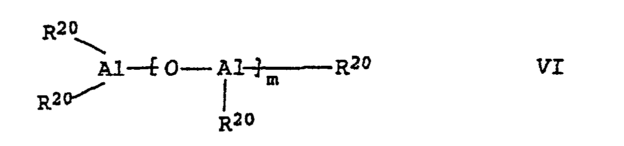 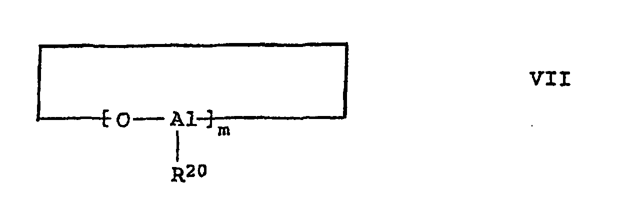
où R²⁰ représente un groupe alkyle en C₁ à C₄ et
m représente un nombre entier valant de 5 à 30.
